# EUROPEAN PATENT SPECIFICATION

(11) **EP 4 502 814 B1**
(45) Date of publication and mention of the grant of the patent: **09.12.2026**
(21) Application number: 24186472.7
(22) Date of filing: 04.07.2024
(51) Int. Cl.: G06F 13/16

(54) **PROCESSING MEMORY ACCESS TRANSACTIONS**
VERARBEITUNG VON SPEICHERZUGRIFFSTRANSAKTIONEN
TRAITEMENT DE TRANSACTIONS D'ACCÈS MÉMOIRE

(30) Priority: 04.08.2023 GB 202311973; 04.08.2023 GB 202311971
(43) Date of publication of application: 05.02.2025
(73) Proprietor: Imagination Technologies Limited, Kings Langley, Hertfordshire WD4 8LZ (GB)
(72) Inventor: VRABEL, Peter, Kings Langley, WD4 8LZ (GB); ANDREW, Jack, Kings Langley, WD4 8LZ (GB); MUNNAN, Ravindranath, Kings Langley, WD4 8LZ (GB)
(74) Representative: Page White Farrer

(56) References cited:
- US-A1- 2013 339 621
- US-A1- 2017 308 468

## Description

### TECHNICAL FIELD

The present disclosure relates to the processing of memory access transactions (e.g. load and store transactions) by a processing system.

### BACKGROUND

In a computing (or processing) system, a central processing unit (CPU) is responsible for executing instructions of a computer program. A CPU typically includes arithmetic-logic units (ALUs) that perform arithmetic and logic operations, processor registers that supply operands to the ALU and store the results of ALU operations, a control unit responsible for fetching, decoding and executing instructions as part of an instruction cycle, and one or more buses allowing data to flow between the other components. The components of the CPU are arranged in execution paths (or data paths). During a given instruction cycle, an instruction is fetched from program memory, then decoded to determine what the CPU is required to do, and finally executed. Data is transferred along one of the execution paths of the CPU during execution of the instruction.

Processing systems may have a load-store architecture whereby the instruction set architecture (i.e. the set of instructions that are implemented by the system) fall into one of several categories, including: memory access instructions (in which data is transferred between memory and registers), ALU operations (in which data is transferred between registers only), instructions which modify system registers without using the ALU, branches, system calls, barriers, and no-ops (NOPs).

A memory system (or memory access) instruction refers to a load or store instruction. For example, a memory access instruction may be "read the value from memory address 1234 into value A" or "write value B to memory address 5678". A given memory access instruction may give rise to one or more memory access transactions, i.e. one or more requests to read or write data from or to memory. When a CPU executes memory instructions, some memory system transactions (i.e. loads or store requests) go through the same execution path, e.g. from the control unit through a memory system unit to a slave (e.g. DRAM controller), and a result may be returned along the same path. Whether transactions go through the same execution path depends on the design of the CPU.

Transactions typically require storing data and control information into buffers inside and outside of the CPU. Put another way, transactions may need to write to certain buffers in the memory system in order to progress through the memory system.

When processing multiple transactions which use the same execution path, a part of the execution path or a buffer may be in use by a previous transaction (e.g. a transaction of a previously executed instruction, or a different transaction resulting from the same instruction), meaning that the processing of a current transaction is delayed until that part of the execution path or buffer becomes available for the current transaction. That is, the processing of one transaction is dependent on the processing of another transaction.

The dependency of the processing of one transaction on another is problematic. For instance, it is problematic if a transaction needs to be executed quickly (i.e. within a certain time frame) and execution of the transaction requires a component of the execution path or a buffer that is currently in use by a different transaction. For example, the transaction may relate to a safety-critical operation which should not be delayed by other non-safety related operations. A specific example is in the context of anti-lock braking systems (ABS). In this context, a transaction relating to an instruction to apply the brakes should not be impacted by other transactions. There is therefore a need for a CPU to be able to prioritise a certain subset of a group of transactions which do use the same execution path.
US2013339621A1 discloses methods and apparatus to efficiently manage data in caches. Data in caches may be managed based on priorities assigned to the data. Data may be requested by a process using a virtual address of the data. The requested data may be assigned a priority by a component in a computer system called an address range priority assigner (ARP). The ARP may assign a particular priority to the requested data if the virtual address of the requested data is within a particular range of virtual addresses.
US2017308468A1 discloses a system for cache line memory access. In response to a miss in the cache of a sector address requested by the processor, request a cache line from the memory. The cache line request is divided into first and second cache subline requests. A determination is made as to which of the first and second cache subline requests corresponds to the requested sector address. Responsive to determining that the first cache subline request corresponds to the requested sector address, the first cache subline request is placed into a high priority queue of the memory controller and the second cache subline request is placed into a low priority queue of the memory controller. Requests from the high priority queue are serviced before requests from the low priority queue.

### SUMMARY

The invention is set out in the appended set of claims. The dependent claims set out particular embodiments.

Some CPUs require that certain memory access instructions have higher determinism or Quality of Service (QoS) guarantees than others. In other words, a CPU may require that a particular memory access instruction is executed within a time threshold, or without any delay. Previous attempts at dealing with this issue involve having separate ports (a port being a collection of signals which are used to send data between two sections of the system) for each memory region (i.e. address range) that needs a determinism guarantee, the location of these ports being in a fixed address space, and the ports being driven by separate, non-shared logic.

Some embodiments of the present disclosure solve the problem by using a memory attribute structure (e.g. a look-up table) to specify certain memory regions as high priority, and prioritise the processing of transactions that require a high priority memory region.

Some embodiments of the present disclosure solve the problem by using a memory attribute structure to specify certain memory regions as high priority, and reserve buffer space (e.g. a collection of registers (or other memory type, such as RAMs) which is used to store the data or control for a transaction) for transactions that require a high priority memory region.

According to embodiments of the present disclosure, marking a transaction as high priority means that it can be prioritised at some or all stages of the execution path. This has the effect that it reaches the slave unit (e.g. DRAM controller) as quickly as possible without having to wait for the execution path to deal with other transactions. Similarly, a result of the transaction may be prioritised when being returned to the CPU.

Similarly, reserving buffer space for high priority transactions has the effect that there are free buffers available for reading and writing the data required by the (load or store) transaction, meaning that processing of the high priority transaction is not delayed until buffer space becomes available.

According to one aspect disclosed herein, there is provided a method of configuring a memory attribute structure for use when processing memory access transactions through an execution path of a processing system. The method comprises configuring one or more memory address entries, each memory address entry comprising a respective memory address range mapped to a respective priority level of a set of priority levels. A central processing unit of the processing system is configured to use the memory attribute structure to determine respective priority levels mapped to respective memory addresses of respective memory access transaction, and process the respective memory access transactions based on the respective priority levels.

According to another aspect disclosed herein, there is provided a method of configuring a processing system for processing a memory access transaction through an execution path of a processing system. The method comprises configuring one or more memory address entries, each memory address entry comprising a respective memory address range mapped to a respective priority level of a set of priority levels. A central processing unit of the processing system is configured to use the memory attribute structure to determine respective priority levels mapped to respective memory addresses of respective memory access transaction, and process the respective memory access transactions based on the respective priority levels.

Each memory address entry specifies the respective priority level of the respective memory address range. That is, the respective priority level of a memory address range is defined in (and dictated by) the memory attribute table.

The memory attribute structure may be used by the central processing unit to determine the priority level of a memory access transaction by identifying (e.g. looking-up) the memory address of the memory access transaction in the memory attribute table, and identifying the priority level specified for that memory address region as part of the relevant memory address entry.

In embodiments, the memory attribute may be configured to specify one or more of: a respective upper and/or respective lower address of at least one of the one or more respective memory address ranges, and a number of priority levels of the set of priority levels.

In embodiments, each respective priority level is associated with one or more respective reserved buffer spaces reserved for use by memory access transactions associated with the respective priority level.

In embodiments, the memory attribute structure may be configurable by a user of the processing system. For example, one or more of the following may be configurable: the respective priority level mapped to the respective memory address range, the one or more reserved buffer spaces reserved for use by memory access transactions associated with a respective priority level, a number of priority levels of the set of priority levels is configurable, and a respective number of reserved buffer spaces per respective priority level.

According to another aspect disclosed herein, there is provided a processing system for processing a memory access transaction through an execution path of the processing system. The processing system has stored, in memory, a memory attribute structure comprising one or more memory address entries, each memory address entry comprising a respective memory address range mapped to a respective priority level of a set of priority levels. The processing system is configured to: configure one or more memory address entries, each memory address entry comprising a respective memory address range mapped to a respective priority level of a set of priority levels; use the memory attribute structure to determine respective priority levels mapped to respective memory addresses of respective memory access transaction; and process the respective memory access transactions based on the respective priority levels.

In embodiments, the processing system comprises one or more buffer spaces reserved for use by memory access transactions associated with a predetermined priority level, and wherein processing the respective memory access transactions comprises allocating the respective memory access transactions to one of said reserved buffer spaces

According to another aspect disclosed herein, there is provided a memory attribute structure for use by a central processing unit when processing memory access transactions through an execution path of a processing system, wherein the memory attribute structure comprises one or more memory address entries, each memory address entry comprising a respective memory address range mapped to a respective priority level of a set of priority levels.

According to another aspect disclosed herein, there is provided a method of processing a memory access transaction through an execution path of a processing system. A memory attribute structure comprises one or more memory address entries, each memory address entry comprising a respective memory address range mapped to a respective priority level of a set of priority levels. The method comprises determining a memory address of the memory access transaction; using the memory attribute structure to determine a priority level mapped to the determined memory address; and processing the memory access transaction based on the determined priority level.

According to another aspect disclosed herein, there is provided a processing system for processing a memory access transaction through an execution path of the processing system. The processing system has stored, in memory, a memory attribute structure comprising one or more memory address entries, each memory address entry comprising a respective memory address range mapped to a respective priority level of a set of priority levels. The processing system is configured to: determine a memory address of the memory access transaction; use the memory attribute structure to determine a priority level mapped to the determined memory address; and process the memory access transaction based on the determined priority level.

In embodiments, the processing system comprises one or more buffer spaces reserved for use by memory access transactions associated with a predetermined priority level, and wherein processing the memory access transaction comprises allocating the memory access transaction to one of said reserved buffer spaces.

The processing system may be embodied in hardware on an integrated circuit. There may be provided a method of manufacturing, at an integrated circuit manufacturing system, a processing system. There may be provided an integrated circuit definition dataset that, when processed in an integrated circuit manufacturing system, configures the system to manufacture a processing system. There may be provided a non-transitory computer readable storage medium having stored thereon a computer readable description of a processing system that, when processed in an integrated circuit manufacturing system, causes the integrated circuit manufacturing system to manufacture an integrated circuit embodying a processing system.

There may be provided an integrated circuit manufacturing system comprising: a non-transitory computer readable storage medium having stored thereon a computer readable description of the processing system; a layout processing system configured to process the computer readable description so as to generate a circuit layout description of an integrated circuit embodying the processing system; and an integrated circuit generation system configured to manufacture the processing system according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 shows a computer system in which a graphics processing system is implemented;
Figure 2 shows an integrated circuit manufacturing system for generating an integrated circuit embodying a graphics processing system;
Figure 3 shows an example processing system configured to prioritise certain memory access instructions; and
Figure 4 shows a flow diagram for prioritising certain memory access instructions.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

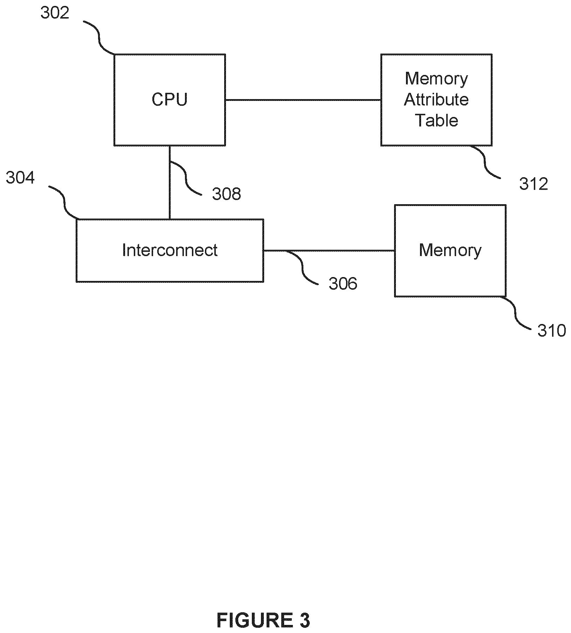

Figure 3 schematically illustrates a simplified version of a processing system. The processing system includes a CPU (i.e. a main processing unit) 302, an interconnect 304 and a memory system 310. The memory system 310 is external to the CPU 302. The CPU 302 is connected to and configured to communicate with the memory system 310 via the interconnect 304 (i.e. a communication bus). The CPU 302 is connected to the interconnect 304 via an interface 308. Similarly, the interconnect 304 is connected to the memory system 310 via an interface 306. The processing system also includes a memory attribute structure 312. The memory attribute structure may take the form of a table or more generally any type of code. The memory attribute table 312 may be stored within the CPU 302 or separate from the CPU. Either way, the CPU is configured to access the memory attribute table. The memory system 310 may take any suitable form such as, for instance, one or more caches, one or more registers and main memory. The system may include each type of memory. Whilst the memory system 310 is shown connected to the interconnect 304 via a single interface 306, it will be appreciated that the memory system 310 may be made up of several sub-systems, each having its own connection to the interconnect.

The memory attribute table includes, amongst other things, a plurality of memory address entries. Each memory address entry specifies a region (or range) of memory. The memory region may be specified by an upper and lower address. Alternatively, the memory region may be specified by a lower address and a size. Each memory range is mapped to (i.e. associated with) a priority level. For example, each memory address entry may be a key-value pair, where the key is the memory range and the value is the priority level. In some examples, there are only two priority levels, e.g. high and low, or prioritised and not prioritised. In these examples, the memory regions that are either mapped to a low priority level or are not prioritised, need not include an indication of the low (or lack of) priority. That is, the absence of an indication of high priority suffices. In some examples, there may be more than two priority levels, e.g. high, medium and low, or very high, high and low. There may be any number of priority levels as long as they follow a hierarchy, with a highest priority level and a lowest priority level. The priority level may be indicated in the memory attribute table in any suitable way, e.g. as an integer (1 or 0), a string (e.g. "high" or "low"), or otherwise. In some examples, only some of the available memory range are included as part of respective entries in the memory attribute table. In other examples, each available memory range is included as part of a respective entry in the memory attribute table. In the former examples, a lack of inclusion of a memory range may be interpreted as that memory range having the lowest priority.

One reason for marking an address range as high priority is that certain peripherals (e.g. external devices) are of particular importance to high priority code and will be in a given address range. Another reason is that the system needs to reserve a small, fast, block of memory for high priority code, and leave the large, slow, block of memory for normal code.

The memory attribute table may include other information, discussed further below.

The processing system is configured to process memory access instructions, i.e. load and store instructions. A given memory access instruction may be decoded into one or more memory access transactions. A memory access transaction is the request to read or write data. For simplicity, examples will primarily be described in the context of a one-to-one mapping of instruction to transaction, but it should be appreciated that the examples may be applied more generally to a one-to-many mapping of instruction to transactions. The examples may also be applied to a many-to-one mapping of transactions to instructions, where multiple instructions are to the same region of memory, and can be combined into one transaction.

Each memory access transaction is associated with a memory address. If the memory access transaction is a request to load (i.e. read) data, the memory address may be an address in memory 310 where the requested data is stored. If the memory access transaction is a request to store (i.e. write) data, the address may be an address in memory 310where the data is to be stored.

The processing system is configured to process memory access transactions based on the associated memory address and a priority level of that memory address. When processing a memory access transaction, the CPU 302 determines (e.g. when decoding the corresponding memory access instruction) a memory address required by the transaction. The CPU 302 looks up the memory address in the memory attribute table. That is, the CPU 302 determines which memory address entry includes a memory range incorporating the memory address required by the transaction. The CPU 302 then identifies the priority level mapped to the memory range that incorporates the required memory address. Thereafter, the processing of the memory access transaction is based, at least in part, on the priority level.

The CPU 302 may associate a memory access transaction with a priority level. This may be done in any suitable way. For example, the CPU 302 may attach (e.g. prepend or append) a flag (e.g. one or more bits) to the transaction which indicates the priority level. The flag may remain attached to the memory access transaction as it passes to each component of the processing system so that the component is aware of its priority level.

The memory access transaction may be prioritised for processing over memory access transactions having a lower priority. That is, the CPU 302 may determine respective memory addresses required by one or more other memory access transactions, and then determine the corresponding priority levels of those memory addresses. If the memory transaction is associated with a priority level higher (i.e. greater, more important, etc.) than that of one or more of those other memory access transactions, the memory transaction is prioritised over the lower priority transactions. E.g. in the case of only two priority levels, if the transaction is a high priority transaction it is prioritised over low priority transactions. In contrast, the transaction may not be prioritised over transactions having a higher priority than the target priority level. Similarly, in some examples, the transaction is not prioritised over previous transactions (i.e. transactions that the CPU 302 has already begun processing) having the same priority level.

The memory access transaction may be prioritised over lower priority memory access transactions for transmission to one or more components of the processing system. That is, the memory access transaction may be prioritised when selecting which memory access transaction to send over one or more interfaces between components of the processing system. For instance, the memory access transaction may be prioritised for transmission between the CPU 302 and interconnect 304 and/or between the interconnect 304 and the memory system310. Similarly, a result of the operation(s) triggered to be performed by the memory access transaction may be prioritised when being returned to the CPU 302 from the memory system 310 via the interconnect 304. In some examples, selection of the memory access transaction is prioritised at each interface of the processing system.

The memory access transaction may be prioritised over lower priority memory access transactions for processing by one or more components of the processing system. For example, the CPU 302 may process the memory access transaction ahead of one or more lower priority transactions, e.g. the memory access transaction may be chosen for execution ahead of the lower priority transactions. The interconnect 304 may process the memory access transaction ahead of one or more lower priority transactions, e.g. the memory access transaction may be sent to the memory system 310 ahead of the lower priority transactions. Similarly, the memory access transaction may be prioritised for acceptance into buffer space ahead of the lower priority transactions. That is, if buffer space is available for accepting a transaction, the memory access transaction may be sent to the buffer instead of the lower priority transactions.

As mentioned, the processing system may include a plurality of buffers. One or more buffers are included in logic internal to the CPU 302. One or more buffers may be included in logic internal to the interconnect 304. Of those buffers, some may be reserved for prioritising the processing of high priority transactions. That is, some buffers may be marked as "reserved buffers". When the CPU 302 determines that a memory access transaction has a certain priority level (e.g. any level above the lowest priority level), one of the reserved buffers may be kept free for accepting the memory access transaction. In other words, the CPU 302 allocates the memory access transaction to a reserved buffer such that there is no delay in the memory access transaction being sent to and stored in a buffer.

Each memory region may be mapped to one or more reserved buffers. Additionally or alternatively, each priority level may be mapped to one or more reserved buffers. The mappings may be stored in the memory attribute table 312. For example, a memory address entry map comprise a memory region mapped to the one or more reserved buffers. The entry may contain an indication or reference of the reserved buffers for use by the CPU 302 in directing a memory access transaction to one of said buffers.

The memory address entries in the memory attribute table may be fixed or configurable by a user a device embodying the processing system. In the latter case, one or more entries may be pre-loaded. New entries may be created. Entries may be edited. For example, a user may configure the memory attribute table by mapping priority levels to memory address ranges. The number of priority levels may be selected by the user. The user may configure the memory attribute table by marking one or more buffers as reserved buffers. The user may select the number of reserved buffers allocated to each memory range and/or priority level. A total number of reserved buffers may be chosen by the user. The memory attribute table may be configured at build time of the processing system.

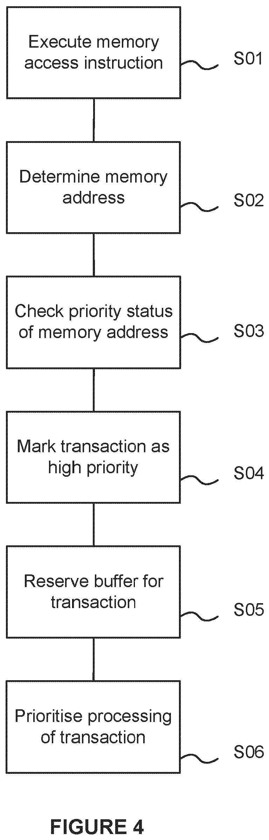

Figure 4 shows an example flow a memory access transaction according to embodiments described herein. Some steps may be omitted and/or performed in a different order. The flow may involve additional steps not shown. In step S01, the CPU 302 executes a memory access instruction which generates one or more memory access transactions. For a given memory access transaction, the CPU 302 determines, in step S02 a memory address associated with that transaction. In step S03, the CPU 302 looks-up the memory address in a memory attribute table 312 and determines if the memory address is marked as high priority. If the memory address is marked as high priority, the transaction is marked as high priority (e.g. with a flag) in step S04. If the memory address is marked as high priority, buffer space is reserved for the transaction in step S05. In step S06, the high priority transaction is prioritised over lower priority transactions for processing, including: prioritizing selection of the transaction to be sent over a CPU-interconnect interface 308 and any interconnect-slave interface (e.g. between the interconnect and a slave or secondary processing unit, if present), prioritizing acceptance of the transaction into reserved buffer space, and prioritizing the sending of a result of the transaction being executed to be sent over the slave-interconnect interface and/or interconnect-CPU interface 308.

The processing system may have a RISC-V architecture. The memory attribute table may be a physical memory attribution (PMA) table. The RISC-V PMA table may be extended so that it specifies the determinism/QoS requirements for each address range. Each set of memory regions with a shared requirement may have internal buffers and logic reserved for a group of memory accesses and may have its own external interface. The number of groups, amount of reserved logic for each group, and the regions per group, may all be configurable at build time. Existing solutions are not as configurable or flexible, are more complex, and have a higher area cost. For example, if a system had different ports for different memory ranges to provide a determinism guarantee, that would require additional area to provide the dedicated logic for driving the different ports, and the memory ranges could not be changed once the hardware had been manufactured. In contrast, the present solution allows the same hardware logic to be configured in different ways, according to the usage requirements.

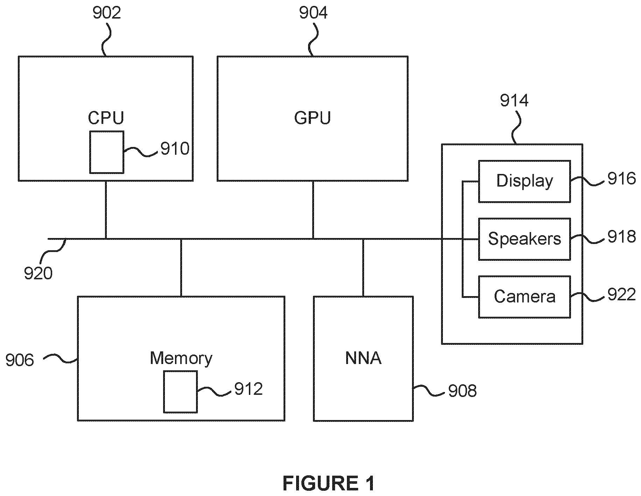

Figure 1 shows a computer system in which processing systems described herein may be implemented. The computer system comprises a CPU 902, a GPU 904, a memory 906, a neural network accelerator (NNA) 908 and other devices 914, such as a display 916, speakers 918 and a camera 922. A processing block 910 is implemented on the CPU 902. The processing block may be configured to perform the methods described herein. In other examples, one or more of the depicted components may be omitted from the system, and/or the processing block 910 may be implemented on the GPU 904 or within the NNA 908. The components of the computer system can communicate with each other via a communications bus 920. A store 912 is implemented as part of the memory 906.

Whilst shown as having different labels, the CPU 302, interconnect 304 and memory 310 of Figure 3 may be the same components as the CPU 902, bus 920 and memory 906 of Figure 1. The processing block 910 may be configured to perform the operations described above as being performed by the CPU 302.

The processing system of Figures 1 to 3 are shown as comprising a number of functional blocks. This is schematic only and is not intended to define a strict division between different logic elements of such entities. Each functional block may be provided in any suitable manner. It is to be understood that intermediate values described herein as being formed by a processing system need not be physically generated by the processing system at any point and may merely represent logical values which conveniently describe the processing performed by the processing system between its input and output.

The processing system described herein may be embodied in hardware on an integrated circuit. The processing system described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a processing system configured to perform any of the methods described herein, or to manufacture a processing system comprising any apparatus described herein. An integrated circuit definition dataset may be, for example, an integrated circuit description.

Therefore, there may be provided a method of manufacturing, at an integrated circuit manufacturing system, a processing system as described herein. Furthermore, there may be provided an integrated circuit definition dataset that, when processed in an integrated circuit manufacturing system, causes the method of manufacturing a processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

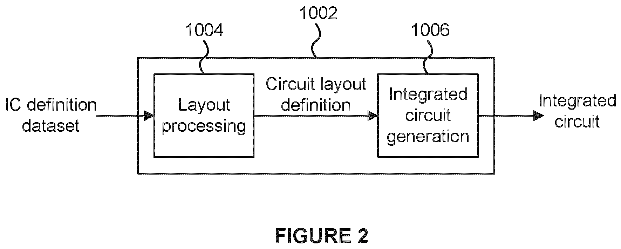

An example of processing an integrated circuit definition dataset at an integrated circuit manufacturing system so as to configure the system to manufacture a processing system will now be described with respect to Figure 2.

Figure 2 shows an example of an integrated circuit (IC) manufacturing system 1002 which is configured to manufacture a processing system as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a processing system as described in any of the examples herein), process the IC definition dataset, and generate an IC according to the IC definition dataset (e.g. which embodies a processing system as described in any of the examples herein). The processing of the IC definition dataset configures the IC manufacturing system 1002 to manufacture an integrated circuit embodying a processing system as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 2 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 2, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

## Claims

1. A method of configuring a memory attribute structure (312) for use when processing memory access transactions through an execution path of a processing system, wherein the method comprises:
configuring one or more memory address entries, each memory address entry comprising a respective memory address range mapped to a respective priority level of a set of priority levels; and
associating, for each respective priority level, one or more respective reserved buffer spaces reserved for use by memory access transactions associated with the respective priority level, wherein a central processing unit (302) is configured to use the memory attribute structure to determine respective priority levels mapped to respective memory addresses of respective memory access transaction, and process the respective memory access transactions based on the respective priority levels, wherein the memory attribute structure (312) comprises, for each respective priority level of the set of priority levels, a respective indication of one or more respective reserved buffer spaces.

2. The method of claim 1, comprising configuring a respective upper and/or respective lower address of at least one of the one or more respective memory address ranges.

3. The method of claim 1 or claim 2, comprising configuring a number of priority levels of the set of priority levels.

4. The method of any preceding claim, comprising configuring a number of reserved buffer spaces for each respective priority level.

5. The method of any preceding claim, comprising configuring a total number of reserved buffer spaces reserved for memory access transactions associated with any of the set of priority levels.

6. The method of any of claims 1 to 5, comprising configuring the memory attribute structure (312) at build time of the processing system.

7. A computer program comprising instructions which, when the program is executed by a computer, cause the computer to carry out the method of any of claims 1 to 6.

8. A computer readable storage medium having stored thereon the computer program of claim 7.

9. A processing system for processing a memory access transaction through an execution path of the processing system, wherein the processing system has stored, in memory, a memory attribute structure (312) comprising one or more memory address entries, each memory address entry comprising a respective memory address range mapped to a respective priority level of a set of priority levels, and wherein the processing system is configured to:
configure one or more memory address entries, each memory address entry comprising a respective memory address range mapped to a respective priority level of a set of priority levels;
associate, for each respective priority level, one or more respective reserved buffer spaces reserved for use by memory access transactions associated with the respective priority level;
use the memory attribute structure (312) to determine respective priority levels mapped to respective memory addresses of respective memory access transaction; and
process the respective memory access transactions based on the respective priority levels, wherein the memory attribute structure (312) comprises, for each respective priority level of the set of priority levels, a respective indication of one or more respective reserved buffer spaces.

10. The processing system of claim 9, wherein the processing system comprises one or more buffer spaces reserved for use by memory access transactions associated with a predetermined priority level, and wherein processing the respective memory access transactions comprises allocating the respective memory access transactions to one of said reserved buffer spaces.

11. A method of processing a memory access transaction through an execution path of a processing system, wherein a memory attribute structure (312) comprises one or more memory address entries, each memory address entry comprising a respective memory address range mapped to a respective priority level of a set of priority levels, and wherein the method comprises:
determining a memory address of the memory access transaction;
using the memory attribute structure (312) to determine a priority level mapped to the determined memory address; and
processing the memory access transaction based on the determined priority level, wherein the processing system comprises one or more buffer spaces reserved for use by memory access transactions associated with a predetermined priority level, and wherein processing the memory access transaction comprises allocating the memory access transaction to one of said reserved buffer spaces, wherein the memory attribute structure (312) comprises, for each respective priority level of the set of priority levels, a respective indication of one or more respective reserved buffer spaces.

## Patentansprüche

1. Verfahren zum Konfigurieren einer Speicherattributstruktur (312) zur Verwendung bei der Verarbeitung von Speicherzugriffstransaktionen mittels eines Ausführungspfads eines Verarbeitungssystems, wobei das Verfahren umfasst:
Konfigurieren eines oder mehrerer Speicheradresseneinträge, wobei jeder Speicheradresseneintrag einen jeweiligen Speicheradressenbereich umfasst, der auf eine jeweilige Prioritätsebene eines Satzes von Prioritätsebenen abgebildet ist; und
Zuordnen, für jede jeweilige Prioritätsebene, eines oder mehrerer jeweiliger reservierter Pufferräume, die für die Verwendung durch Speicherzugriffstransaktionen reserviert sind, die mit der jeweiligen Prioritätsebene assoziiert sind, wobei eine zentrale Verarbeitungseinheit (302) konfiguriert ist, die Speicherattributstruktur zu verwenden, um jeweilige Prioritätsebenen zu bestimmen, die auf jeweilige Speicheradressen der jeweiligen Speicherzugriffstransaktion abgebildet sind, und die jeweiligen Speicherzugriffstransaktionen basierend auf den jeweiligen Prioritätsebenen zu verarbeiten, wobei die Speicherattributstruktur (312) für jede jeweilige Prioritätsebene des Satzes von Prioritätsebenen eine jeweilige Angabe eines oder mehrerer jeweiliger reservierter Pufferräume umfasst.

2. Verfahren nach Anspruch 1, umfassend das Konfigurieren einer jeweiligen oberen und/oder jeweiligen unteren Adresse von mindestens einem des einen oder der mehreren jeweiligen Speicheradressbereiche.

3. Verfahren nach Anspruch 1 oder Anspruch 2, umfassend das Konfigurieren einer Anzahl von Prioritätsebenen des Satzes von Prioritätsebenen.

4. Verfahren nach einem der vorhergehenden Ansprüche, umfassend das Konfigurieren einer Anzahl von reservierten Pufferräumen für jede jeweilige Prioritätsebene.

5. Verfahren nach einem der vorhergehenden Ansprüche, umfassend das Konfigurieren einer Gesamtzahl von reservierten Pufferräumen, die für Speicherzugriffstransaktionen reserviert sind, die mit einer beliebigen des Satzes von Prioritätsebenen assoziiert sind.

6. Verfahren nach einem der Ansprüche 1 bis 5, umfassend das Konfigurieren der Speicherattributstruktur (312) zur Aufbauzeit des Verarbeitungssystems.

7. Computerprogramm, das Anweisungen umfasst, die, wenn das Programm von einem Computer ausgeführt wird, den Computer veranlassen, das Verfahren nach einem der Ansprüche 1 bis 6 durchzuführen.

8. Computerlesbares Speichermedium mit dem darauf gespeicherten Computerprogramm nach Anspruch 7.

9. Verarbeitungssystem zum Verarbeiten einer Speicherzugriffstransaktion mittels eines Ausführungspfads des Verarbeitungssystems, wobei das Verarbeitungssystem in dem Speicher eine Speicherattributstruktur (312) gespeichert hat, die einen oder mehrere Speicheradresseneinträge umfasst, wobei jeder Speicheradresseneintrag einen jeweiligen Speicheradressenbereich umfasst, der auf eine jeweilige Prioritätsebene eines Satzes von Prioritätsebenen abgebildet ist, und wobei das Verarbeitungssystem konfiguriert ist zum:
Konfigurieren eines oder mehrerer Speicheradresseneinträge, wobei jeder Speicheradresseneintrag einen jeweiligen Speicheradressenbereich umfasst, der auf eine jeweilige Prioritätsebene eines Satzes von Prioritätsebenen abgebildet ist;
Zuordnen, für jede jeweilige Prioritätsstufe, eines oder mehrerer jeweiliger reservierter Pufferräume, die für die Verwendung durch Speicherzugriffstransaktionen reserviert sind, die mit der jeweiligen Prioritätsstufe assoziiert sind;
Verwenden der Speicherattributstruktur (312) zum Bestimmen jeweiliger Prioritätsebenen, die auf jeweilige Speicheradressen der jeweiligen Speicherzugriffstransaktion abgebildet sind; und
Verarbeiten der jeweiligen Speicherzugriffstransaktionen basierend auf den jeweiligen Prioritätsebenen, wobei die Speicherattributstruktur (312) für jede jeweilige Prioritätsebene des Satzes von Prioritätsebenen eine jeweilige Angabe von einem oder mehreren jeweiligen reservierten Pufferräumen umfasst.

10. Verarbeitungssystem nach Anspruch 9, wobei das Verarbeitungssystem einen oder mehrere Pufferräume umfasst, die zur Verwendung durch Speicherzugriffstransaktionen reserviert sind, die mit einer vorbestimmten Prioritätsebene assoziiert sind, und wobei das Verarbeiten der jeweiligen Speicherzugriffstransaktionen ein Zuordnen der jeweiligen Speicherzugriffstransaktionen zu einem der reservierten Pufferräume umfasst.

11. Verfahren zum Verarbeiten einer Speicherzugriffstransaktion mittels eines Ausführungspfads eines Verarbeitungssystems, wobei eine Speicherattributstruktur (312) einen oder mehrere Speicheradresseneinträge umfasst, wobei jeder Speicheradresseneintrag einen jeweiligen Speicheradressenbereich umfasst, der auf eine jeweilige Prioritätsebene eines Satzes von Prioritätsebenen abgebildet ist, und wobei das Verfahren umfasst:
Bestimmen einer Speicheradresse der Speicherzugriffstransaktion;
Verwenden der Speicherattributstruktur (312), um eine Prioritätsebene zu bestimmen, die auf die bestimmte Speicheradresse abgebildet ist; und
Verarbeiten der Speicherzugriffstransaktion basierend auf der bestimmten Prioritätsebene, wobei das Verarbeitungssystem einen oder mehrere Pufferräume umfasst, die zur Verwendung durch Speicherzugriffstransaktionen reserviert sind, die mit einer vorbestimmten Prioritätsebene assoziiert sind, und wobei das Verarbeiten der Speicherzugriffstransaktion ein Zuordnen der Speicherzugriffstransaktion zu einem der reservierten Pufferräume umfasst, wobei die Speicherattributstruktur (312) für jede jeweilige Prioritätsebene des Satzes von Prioritätsebenen eine jeweilige Angabe eines oder mehrerer jeweiliger reservierter Pufferräume umfasst.

## Revendications

1. Procédé de configuration d'une structure d'attribut de mémoire (312) pour une utilisation lors du traitement de transactions d'accès à la mémoire par l'intermédiaire d'un chemin d'exécution d'un système de traitement, dans lequel le procédé comprend :
la configuration d'une ou de plusieurs entrées d'adresses de mémoire, chaque entrée d'adresses de mémoire comprenant une plage d'adresses de mémoire respective mise en correspondance avec un niveau de priorité respectif d'un ensemble de niveaux de priorité ; et
l'association, pour chaque niveau de priorité respectif, d'un ou plusieurs espaces tampons réservés respectifs réservés pour une utilisation par des transactions d'accès à la mémoire associées au niveau de priorité respectif, dans lequel une unité centrale de traitement (302) est configurée pour utiliser la structure d'attributs de mémoire afin de déterminer les niveaux de priorité respectifs mis en correspondance avec les adresses mémoire respectives de la transaction d'accès à la mémoire respective, et traiter les transactions d'accès à la mémoire respectives sur la base des niveaux de priorité respectifs, dans lequel la structure d'attributs de mémoire (312) comprend, pour chaque niveau de priorité respectif de l'ensemble de niveaux de priorité, une indication respective d'un ou plusieurs espaces tampons réservés respectifs.

2. Procédé selon la revendication 1, comprenant la configuration d'une adresse supérieure respective et/ou d'une adresse inférieure respective d'au moins l'une parmi les une ou plusieurs plages d'adresses mémoire respectives.

3. Procédé selon la revendication 1 ou la revendication 2, comprenant la configuration d'un certain nombre de niveaux de priorité parmi l'ensemble de niveaux de priorité.

4. Procédé selon une quelconque revendication précédente, comprenant la configuration d'un certain nombre d'espaces tampons réservés pour chaque niveau de priorité respectif.

5. Procédé selon une quelconque revendication précédente, comprenant la configuration d'un nombre total d'espaces tampons réservés pour des transactions d'accès à la mémoire associées à l'un quelconque de l'ensemble de niveaux de priorité.

6. Procédé selon l'une quelconque des revendications 1 à 5, comprenant la configuration de la structure d'attribut de mémoire (312) au moment de la génération du système de traitement.

7. Programme d'ordinateur comprenant des instructions qui, lorsque le programme est exécuté par un ordinateur, amène l'ordinateur à effectuer le procédé de l'une quelconque des revendications 1 à 6.

8. Support de stockage lisible par ordinateur sur lequel est stocké le programme d'ordinateur selon la revendication 7.

9. Système de traitement destiné à traiter une transaction d'accès à la mémoire par l'intermédiaire d'un chemin d'exécution du système de traitement, dans lequel le système de traitement a stocké, en mémoire, une structure d'attributs de mémoire (312) comprenant une ou plusieurs entrées d'adresses de mémoire, chaque entrée d'adresses de mémoire comprenant une plage d'adresses de mémoire respectives mise en correspondance avec un niveau de priorité respectif d'un ensemble de niveaux de priorité, et dans lequel le système de traitement est configuré pour :
configurer une ou de plusieurs entrées d'adresses de mémoire, chaque entrée d'adresses de mémoire comprenant une plage d'adresses de mémoire respective mise en correspondance avec un niveau de priorité respectif d'un ensemble de niveaux de priorité ;
associer, pour chaque niveau de priorité respectif, un ou plusieurs espaces tampons réservés respectifs réservés pour une utilisation par des transactions d'accès à la mémoire associées au niveau de priorité respectif ;
utiliser la structure d'attribut de mémoire (312) pour déterminer des niveaux de priorité respectifs mis en correspondance avec les adresses de mémoire respectives de la transaction d'accès à la mémoire respective ; et
traiter les transactions d'accès à la mémoire respectives sur la base des niveaux de priorité respectifs, dans lequel la structure d'attribut de mémoire (312) comprend, pour chaque niveau de priorité respectif de l'ensemble de niveaux de priorité, une indication respective d'un ou de plusieurs espaces tampons réservés respectifs.

10. Système de traitement selon la revendication 9, dans lequel le système de traitement comprend un ou plusieurs espaces tampons réservés pour être utilisés par des transactions d'accès à la mémoire associées à un niveau de priorité prédéterminé, et dans lequel le traitement des transactions d'accès à la mémoire respectives comprend l'attribution des transactions d'accès à la mémoire respectives à l'un desdits espaces tampons réservés.

11. Procédé de traitement d'une transaction d'accès à la mémoire par l'intermédiaire d'un chemin d'exécution d'un système de traitement, dans lequel une structure d'attributs de mémoire (312) comprend une ou plusieurs entrées d'adresses de mémoire, chaque entrée d'adresses de mémoire comprenant une plage d'adresses de mémoire respectives mise en correspondance avec un niveau de priorité respectif d'un ensemble de niveaux de priorité, et dans lequel le procédé comprend :
la détermination d'une adresse de mémoire de la transaction d'accès à la mémoire ;
l'utilisation de la structure d'attribut de mémoire (312) pour déterminer un niveau de priorité mis en correspondance avec l'adresse de mémoire déterminée ; et
le traitement de la transaction d'accès à la mémoire sur la base du niveau de priorité déterminé, dans lequel le système de traitement comprend un ou plusieurs espaces tampons réservés destinés à être utilisés par des transactions d'accès à la mémoire associées à un niveau de priorité prédéterminé, et dans lequel le traitement de la transaction d'accès à la mémoire comprend l'attribution de la transaction d'accès à la mémoire à l'un desdits espaces tampons réservés, dans lequel la structure d'attributs de mémoire (312) comprend, pour chaque niveau de priorité respectif de l'ensemble de niveaux de priorité, une indication respective d'un ou plusieurs espaces tampons réservés respectifs.
